# EUROPEAN PATENT SPECIFICATION

(11) **EP 0 295 651 B1**
(45) Date of publication and mention of the grant of the patent: **15.12.1993**
(21) Application number: 88109538.4
(22) Date of filing: 15.06.1988
(51) Int. Cl.: F02P 5/15

(54) **Method and device for controlling the ignition timing of internal combustion engines**
Verfahren und Vorrichtung zum Steuern des Zündzeitpunktes für eine Brennkraftmaschine
Procédé et dispositif de commande de l'instant d'allumage dans un moteur à combustion interne

(30) Priority: 17.06.1987 JP 149226/87
(43) Date of publication of application: 21.12.1988
(73) Proprietor: HITACHI, LTD., Chiyoda-ku, Tokyo 100 (JP)
(72) Inventor: Nagano, Masami, Katsuta-shi Ibaraki 312 (JP); Atago, Takeshi, Katsuta-shi Ibaraki 312 (JP); Miyake, Junji, Katsuta-shi Ibaraki 312 (JP); Sakamoto, Masahide, Katsuta-shi Ibaraki 312 (JP)
(74) Representative: Beetz & Partner Patentanwälte

(56) References cited:
- EP-A- 0 163 953
- FR-A- 2 531 145
- US-A- 4 257 377
- US-A- 4 498 438
- PATENT ABSTRACTS OF JAPAN, vol. 10, no. 385 (M-548)[2442], 24th December 1986; & JP-A-61 175 267 (NISSAN MOTOR CO., LTD) 06-08-1986

## Description

The present invention relates to a method and a device for controlling the ignition timing of internal combustion engines having an electric ignition system such as gasoline engines, and particularly for internal combustion engines of automobiles, which method and device are suited for torque control for preventing a jerky operation on the occasion of acceleration.

In automobiles equipped with a gasoline engine, the depression of the accelerator pedal for rapid acceleration is accompanied by a large pulsation of the acceleration in the advance direction, an acceleration pulsation, which sometimes brings about a jerky operation.

A prior art ignition timing control device for internal combustion engines is disclosed, for instance, in Figure 5 of JP-A1-60-159372. This prior art discloses that a retard angle control of a predetermined value is carried out in acceleration, and after that the retard angle is gradually returned to zero with the lapse of time or at each ignition timing of the engine. This known method aims at reducing the knocking during acceleration.

However, the prior art does not consider the problem of jerky operation which will occur after acceleration. When the retard angle value for the ignition timing is made large for improving the jerky operation, the acceleration is reduced, the ignition is failed, and a jerky operation is not prevented.

It is the object of the present invention to provide a method and a related apparatus which is able to prevent the jerky operation of an engine caused by an acceleration pulsation.

This object is solved in accordance with the features of the independent claims.

According to the claimed method, an ignition timing correction amount is calculated on the basis of the variation amount of the rotational speed of the engine. This variation amount of the rotational speed is calculated as a difference of the actual and a previous rotational speed. According to the invention, rotational speed and ignition timing correction amount are determined independently from each other in terms of time, the former being determined in synchronism with the engine rotation, the latter being calculated periodically at predetermined fixed times. It then may happen that no new values for the engine rotational speed are present, when the ignition timing correction amount is to be determined. It then has to be prevented that a wrong ignition timing correction amount is produced. This could for example happen when it is assumed that the rotational speed variation amount is zero. The problem is overcome by re-using previously calculated values for the ignition timing correction amount as long as no new values of the engine rotational speed were determined.

According to the present invention, since the engine speed can always be taken in stably at a fixed period without being affected by a variation of the engine speed, the variation of the engine speed can be detected accurately, the ignition timing control is executed with excellent responsibility, and thus a sufficient torque control can be implemented.

The invention will now be described with reference to the drawings.
Figures 1A and 1B are flow charts showing the operation of an ignition timing control device of an internal combustion engine according to the present invention;
Figure 2 is a schematic representation of an example of an engine system to which one embodiment of the present invention is applied;
Figure 3 is a schematic diagram of a control unit;
Figure 4 is a characteristic diagram showing the ignition timing correction amount corresponding to the variation amount of the engine rotational speed;
Figure 5 is a schematic diagram illustrating the operation of one embodiment of the present invention;
Figure 6 is a characteristic diagram illustrating the effect of one embodiment of the present invention;
Figure 7 illustrates the detection of the engine speed in the present invention; and
Figure 8 illustrates the detection of the engine speed according to a prior-art time control system.

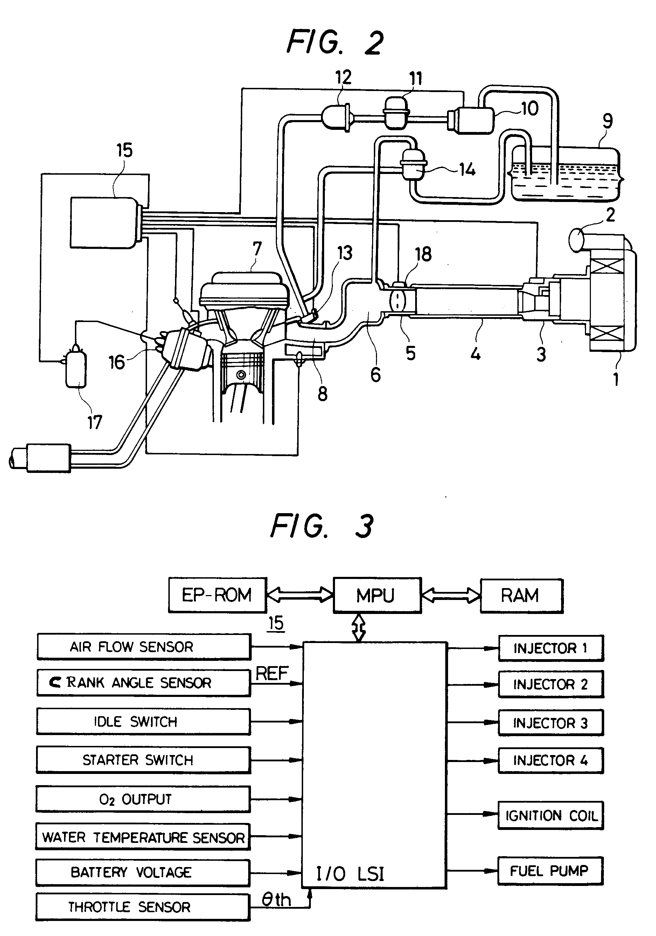

Referring to Figure 2, air to be sucked by an internal combustion engine enters the inlet 2 of an air cleaner 1, passes through a hot-wire airflow meter (airflow sensor) 3 detecting the amount of sucked air, a duct 4 and a throttle body 5 having a throttle valve for controlling the airflow, and enters a collector 6. The air is distributed here to suction pipes 8 leading to the internal combustion engine 7 and is sucked into the cylinders.

Fuel is sucked from a fuel tank 9 by a fuel pump 10, pressurized thereby and supplied to a fuel system wherein a fuel pressure damper 11, a fuel filter 12, an injection nozzle 13 and a fuel pressure regulator 14 are provided. This fuel has a fixed pressure regulated by the fuel pressure regulator 14 and is injected into the suction pipe 8 by means of an injection valve (injector) 13 provided in the suction pipe 8.

Besides, a detection signal of the amount of sucked air is output from the airflow meter 3, and this output is input to a control unit 15.

Moreover, a throttle sensor 18 detecting the degree of opening of the throttle valve is fitted to the aforesaid throttle body 5, and the signal from the throttle sensor is also input to the control unit 15.

The engine comprises a distributor 16, and a crank angle sensor is provided in this distributor 16. A reference signal, REF, is output from this sensor and input to the aforesaid control unit 15.

Figure 3 shows details of the control unit 15. It is constituted by MPU, ROM, RAM and a LSI circuit (I/O LSI) comprising an A/D converter and an input-output circuit, and it executes a prescribed arithmetic processing on the basis of output signals of the sensors shown in Figure 3, and optionally a speed sensor, an air conditioner switch and an electric load switch, and makes the aforesaid injector 13 operate according to an output signal resulting from said arithmetic operation, so that fuel in a necessary amount is injected into each suction pipe 8. In addition, the ignition timing is controlled by sending a signal to a power transistor of an ignition coil 17.

Next, the control operation of one embodiment of the present invention in such a construction as described above will be explained.

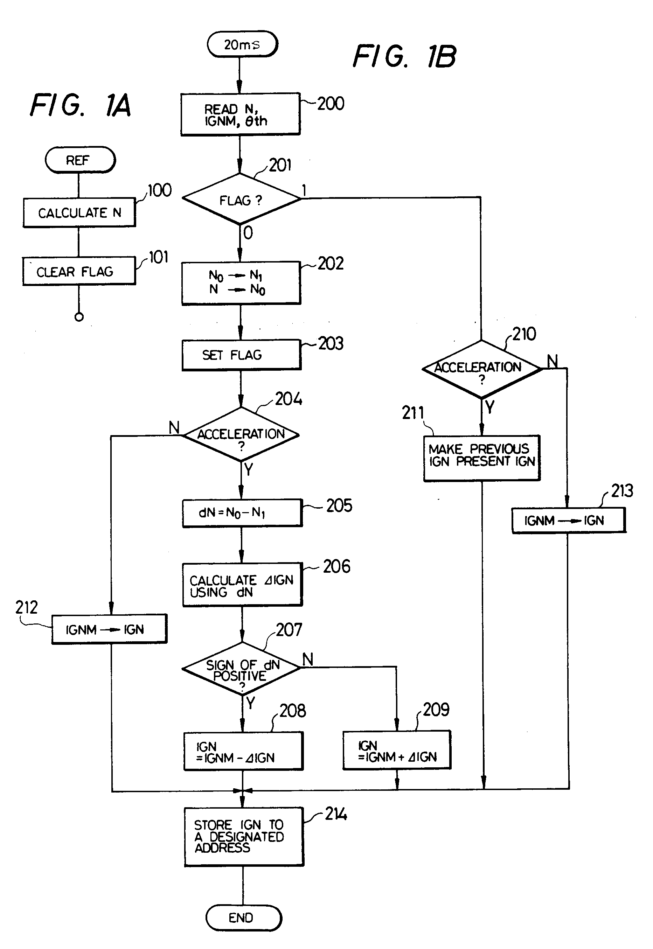

Figure 1 shows a method of controlling the ignition timing according to one embodiment of the present invention.

The MPU in the control unit 15, which executes various processings required for the engine control, is designed to execute a processing of detecting the engine speed N shown in Figure 1A as one of these processings, independently of a processing of calculating an ignition timing correction amount shown in Figure 1B as another of them. First, the detection processing of Figure 1A is executed every time when interruption by a generated REF signal is made in synchronization with the revolution of the engine, and the calculation processing of Figure 1B, on the other hand, is executed repeatedly at a fixed period of 20 ms by a timer interruption or the like.

First, the detection processing of Figure 1A will be explained.

### Step 100:

In this step, the period of the signal REF is measured, and the engine speed N is detected therefrom. Since this processing of Figure 1A is executed by the interruption by REF, the detection of N on this occasion can be conducted easily by measuring the time passing from the time point of the preceding interruption to that of the current interruption.

### Step 101:

In this step, a clear processing is executed for a prescribed flag generated beforehand.

Next, the calculation processing of Figure 1B will be explained.

### Step 200:

In this step, the respective data on the engine speed N, a basic ignition timing IGNM and the throttle angle ϑth are taken in. Out of these data, the engine speed N is found by the above-described processing of Figure 1A, and the basic ignition timing IGNM is obtained by retrieval from a memory map based on the signal of the airflow meter 3 and the engine speed N by other processings by the MPU, which are not shown in the figure, and further, the throttle angle ϑth is given by the throttle sensor 18.

### Step 201:

In this step, the state of the aforesaid flag is examined, and it is judged whether the rotational speed N of the engine is renewed or not. When the rotational speed of the engine is not renewed, the processing proceeds to step 210. When the rotational speed of the engine is renewed, the processing proceeds to step 202. The flag examined at this time is set in a step 203, which will be described later, and also is reset in step 101 in the above-described processing of Figure 1A. Accordingly, the result of this step 201 becomes "1" on and after the second processing when the processing of Figure 1B is executed twice or more by the time when the processing of Figure 1A is repeated after the period of the processing of Figure 1A becomes 20 ms or above.

### Step 202:

In this step, a processing is made wherein data N₀ are transferred to data N₁ and the engine speed N read in the step 200 is set in the data N₀.

### Step 203:

In this step, when the rotational speed of the engine is renewed, the aforesaid flag is set. The processing proceeds to the next step.

### Step 204:

In this step, it is examined whether or not the engine is controlled to be in an accelerated state, and judgment on branching is made. Concretely, the judgement may be made from whether or not the difference between the throttle angle ϑth read currently and a throttle angle ϑth read previously reaches a predetermined value Δϑth.

### Step 205:

In this step, a processing of evaluating data dN, the difference between data N₀ and N₁, is executed.

### Step 206:

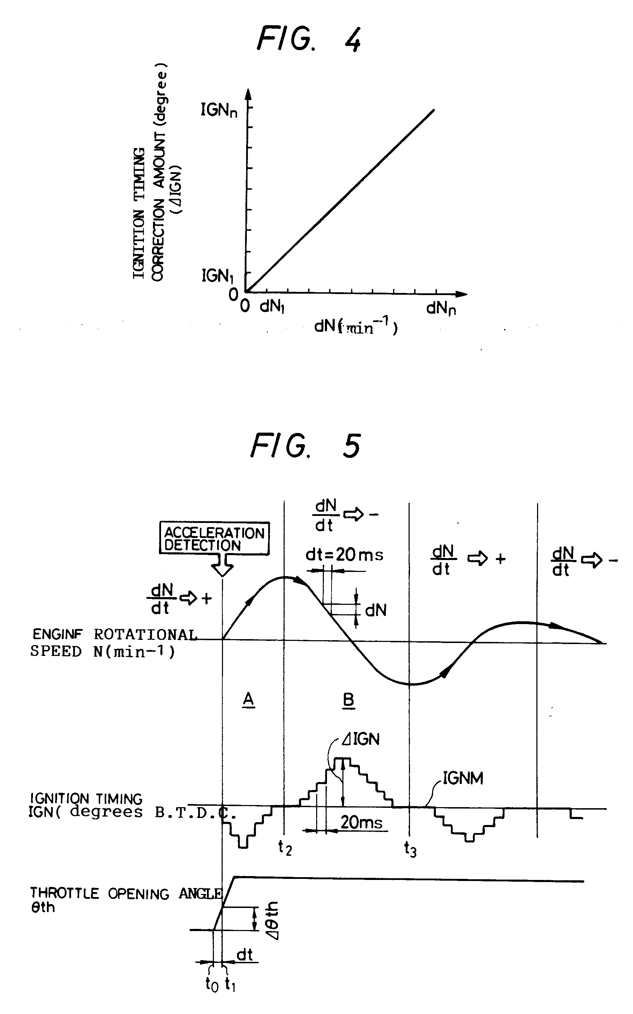

In this step, the ignition timing correction amount ΔIGN is calculated on the basis of retrieval from a map by using the data dN. The map used on this occasion is prepared as shown in Figure 4.

### Step 207:

In this step, examination is made on whether the sign of the difference data dN is positive or negative, so as to make judgment on branching.

### Step 208:

In this step, a processing is made wherein the ignition timing correction amount ΔIGN is sub tracted from the basic ignition timing IGNM to calculate the ignition timing IGN to be used for control.

### Step 209:

In this step, a processing is made wherein the ignition timing correction amount ΔIGN is added to the basic ignition timing IGNM to obtain the ignition timing IGN for control.

### Step 210:

In this step, in the same way as in step 204, judgment on branching is conducted on the basis of the variation rate of the throttle angle ϑth.

### Step 211:

In this step, a processing is made wherein the ignition timing IGN used for the previous control is made to be a current ignition timing IGN as it is.

### Steps 212, 213:

These steps represent the same processings, in which the basic ignition timing IGNM is made to be the ignition timing IGN as it is.

### Step 214:

In this step, a processing of storing the ignition timing IGN under a prescribed address in the memory is executed. The data IGN stored under the prescribed address in this way are used for the actual ignition timing control, and thus the ignition timing of the engine is determined by the data IGN.

Next, a description will be made hereunder on the ignition timing control by the execution of the processings shown in Figs. 1A and 1B according to one embodiment of the present invention with reference to Figure 5.

First, when the amount of depression of the accelerator pedal is maintained at a fixed value, and when the variation rate of the depression amount does not yet reach a predetermined value even with an increase thereof, the result of step 204 or step 210 is N (NO), and therefore step 214 turns to be executed at this time after step 212 or step 213 is executed. Thereby the ignition timing of the engine is maintained at the basic ignition timing IGNM taken in a step 200, and thus the ignition timing control is in a steady state.

Next, when it is assumed that the depression amount of the accelerator pedal is increased at a time t₀, and, as the result, the amount of variation at a time t₁ after the time dt (20 ms) exceeds a predetermined value Δϑth, as shown in Figure 5, this is judged to be an acceleration by step 204 or step 210, and the result is Y (YES). Accordingly, step 214 turns to be executed after the execution of step 208 or step 209, and therefore the ignition timing becomes a modified ignition timing IGN at this time.

During the period A from the time t₁ to t₂, first, at this time, the engine speed N is increased, and therefore the variation rate dN/dt thereof is positive. Consequently, the result at step 207 is Y, and step 208 is executed. Thereby the ignition timing IGN is turned to be a value obtained by subtracting the correction amount ΔIGN from the basic ignition timing IGNM, and the ignition timing is put under a retardation control, so as to operate to reduce the torque.

During the period B from the time t₂ to t₃, secondly, the engine speed N is decreased, and therefore the variation rate dN/dt is negative. Consequently, the result at step 207 is N, and step 209 is executed at this time. Thereby the ignition timing IGN is turned to be a value obtained by adding the correction amount ΔIGN to the basic ignition timing IGNM, and the ignition timing is modified in the sense of acceleration, so as to operate to increase the torque.

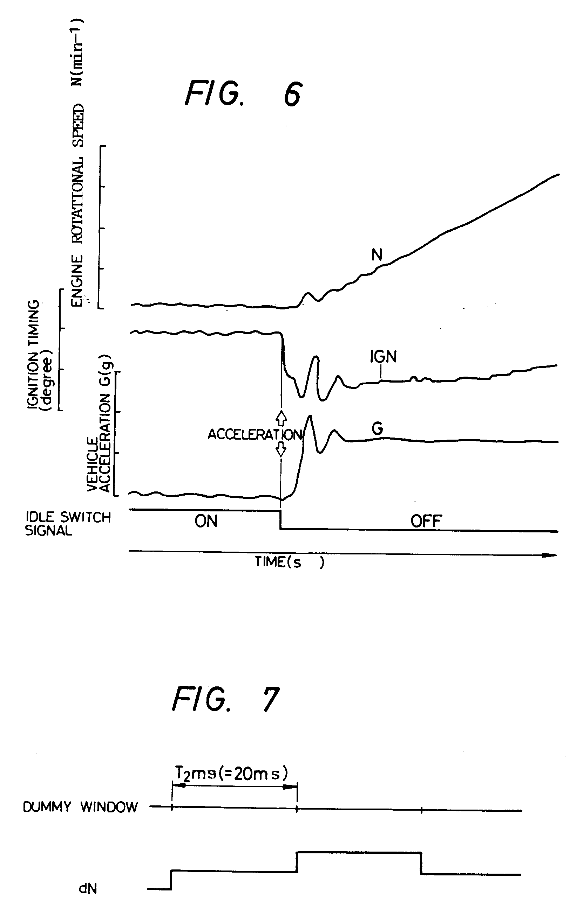

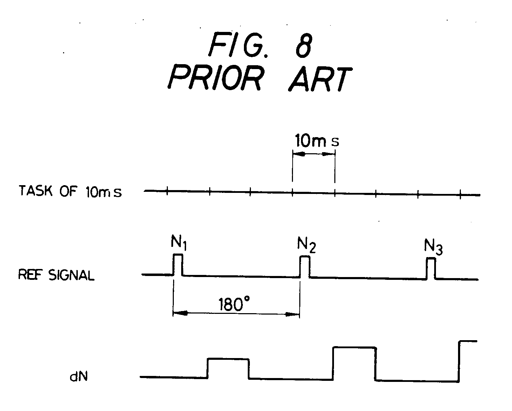

In an engine system of this kind, the engine speed N rises with a periodical variation as shown in Figure 6 when the throttle valve is opened for accelerating operation. As described previously, this is caused by a phenomenon called acceleration surging.

When the variation of the engine speed N exceeds a certain range and appears to be continuous to a considerable extent on this occasion, a so-called jerky operation is brought about.

According to the above-described embodiment, however, a control of modifying the ignition timing to produce an engine torque in the direction of cancelling the variation in the engine speed N is given automatically in response to this variation on and after the time point t₁ when the accelerating operation is detected, as shown in Figure 5, and thereby the variation of the engine speed N is checked and converges rapidly as shown in Figure 6. Therefore, the occurrence of the jerky operation can be checked sufficiently.

Next, a description will be made on the detection of the variation amount dN of the engine speed N in the above embodiment. As is shown in Figs. 1A and 1B, the calculation of this variation dN is implemented by the calculation processing of Figure 1B executed periodically at a fixed time interval (20 ms), independently of the processing of detection of the engine speed by REF, in this embodiment, and as the result, the data dN can be calculated stably for each fixed period T₂(20 ms), for instance, as shown in Figure 7, thus enabling a sufficient checking of the jerky operation as shown in Figure 6. According to the prior-art time control system by using a REF signal, in contrast thereto, the rotational speed N of the engine is detected by REF interruption, and the variation amount dN is calculated by an operation of 10 ms for calculating the fuel injection pulse width. Therefore, results as shown in Figure 8 are brought about. When a period wherein the engine speed N is not varied in relation to the ignition timing is taken, in this case, the modification of the ignition timing cannot be obtained on this occasion, and consequently, a torque control necessary and sufficient for checking the jerky operation cannot be implemented.

In addition, the sampling time of the rotational speed N of the engine is varied in accordance therewith and becomes unstable, and after all, a satisfactory suppressing of the jerky operation cannot be attained by the prior-art time control system.

As is shown in Figure 1, steps 101, 201 and 203 are provided in the above embodiment according to the invention, and therefore the preceding ignition timing IGN is used again, as it is, by step 211 when the detection of the engine speed N is delayed. As the result, the modification of the ignition timing is not lost at any time, and accordingly, the jerky operation can be checked further excellently.

According to the present invention, the detection of the engine speed is executed independently of the modification of the ignition timing. Therefore, it is easy to design the ignition timing control device of an internal combustion engine to implement the modification control of the ignition timing with sufficient accuracy even when the rotational speed of the engine is detected only by REF without using a POS signal for detection thereof, and which, consequently, can check the occurrence of the jerky operation at low cost and with sufficient accuracy.

## Claims

1. A method for controlling the ignition timing of internal combustion engines, comprising the steps of
- detecting the rotational speed (N) of the engine,
- detecting whether the engine is accelerated,
- determining a basic ignition timing (IGNM), and
- calculating an ignition timing correction amount (ΔIGN) on the basis of the variation amount (dN) of the rotational speed (N) of the engine, and
- modifying the basic ignition timing (IGNM) on the basis of the ignition timing correction amount (ΔIGN) when the engine is accelerated,
**characterized** in that
- detecting the rotational speed (N) of the engine and calculating the ignition timing correction amount (ΔIGN) are performed independently of each other in terms of time, in such a manner that the detection is executed in synchronism with the rotation of the engine while the calculation is executed periodically at predetermined fixed times and
- the variation amount (dN) of the rotational speed (N) of engine is calculated as the difference between a present and previous value of the rotational speed (N) of the engine, and that the previous value for the ignition timing correction amount (ΔIGN) is used in the calculation of the ignition timing, whenever no new value of the variation amount (dN) of the rotational speed (N) of the engine is available.

2. Ignition timing control device for internal combustion engines, particularly for carrying out the method according to claim 1, comprising
- detection means (15, 16, 100, 204) for detecting the rotational speed (N) and an engine acceleration,
- determination and calculation means (15, 212, 205, 206) for determining a basic ignition timing (IGNM) and for calculating an ignition timing correction amount (ΔIGN) on the basis of the variation amount (dN) of the rotational speed (N) of the engine, and
- modification means (15, 208) for modifying the basic ignition timing (IGNM) on the basis of the ignition timing correction amount (ΔIGN) when the engine is accelerated,
**characterized** in further comprising
- control means (15) which execute the detection of the rotational speed (N) of the engine and calculation of the ignition timing correction amount (ΔIGN) independently of each other in terms of time, in such a manner that the detection processing is executed periodically in synchronization with the rotation of the engine while the calculation processing is executed periodically at every predetermined fixed time, and wherein the variation amount (dN) of the rotational speed (N) of the engine is calculated as the difference between a present and previous value of the rotational speed (N) of the engine, and that the previous value for the ignition timing correction amount (ΔIGN) is used in the calculation of the ignition timing, whenever no new value of the variation amount (dN) of the rotational speed (N) of the engine is available.

## Patentansprüche

1. Verfahren zur Steuerung des Zündzeitpunkts von Brennkraftmaschinen mit den Schritten
- Erfassen der Drehzahl (N) des Motors,
- Erfassen, ob der Motor beschleunigt wird,
- Bestimmen eines Grundzündzeitpunkts (IGNM) und
- Berechnen eines Korrekturbetrags (ΔIGN) des Zündzeitpunkts auf der Grundlage des Änderungsbetrags (dN) der Drehzahl (N) des Motors, und
- Verändern des Grundzündzeitpunkts (IGNM) auf der Grundlage des Korrekturbetrags (ΔIGN) des Zündzeitpunkts, wenn der Motor beschleunigt wird,
dadurch **gekennzeichnet,** daß
- die Erfassung der Drehzahl (N) des Motors und die Berechnung des Korrekturbetrags (ΔIGN) des Zündzeitpunkts zeitlich unabhängig voneinander derart durchgeführt werden, daß die Erfassung synchron zur Motordrehung durchgeführt wird, während die Berechnung periodisch zu vorbestimmten festen Zeitpunkten durchgeführt wird, und
- der Änderungsbetrag (dN) der Drehzahl (N) des Motors als die Differenz zwischen dem gegenwärtigen und einem früheren Wert der Drehzahl (N) des Motors berechnet wird, und daß der frühere Wert des Korrekturbetrags (ΔIGN) des Zündzeitpunkts zur Berechnung des Zündzeitpunkts immer dann verwendet wird, wenn kein neuer Wert des Änderungsbetrags (dN) der Drehzahl (N) des Motors vorliegt.

2. Zündzeitpunktsteuervorrichtung für Brennkraftmaschinen, insbesondere zur Durchführung des Verfahrens nach Anspruch 1, mit
- einer Erfassungseinrichtung (15, 16, 100, 204) zur Erfassung der Drehzahl (N) sowie einer Motorbeschleunigung,
- einer Bestimmungs- und Berechnungseinrichtung (15, 212, 205, 206) zur Bestimmung eines Grundzündzeitpunkts (IGNM) und zur Berechnung eines Korrekturbetrags (ΔIGN) des Zündzeitpunkts auf der Grundlage des Änderungsbetrags (dN) der Drehzahl (N) des Motors und
- einer Veränderungseinrichtung (15, 208) zum Verändern des Grundzündzeitpunkts (IGNM) auf der Grundlage des Korrekturbetrags (ΔIGN) des Zündzeitpunkts, wenn der Motor beschleunigt wird,
weiter gekennzeichnet durch
- eine Steuerungseinrichtung (15), die die Erfassung der Drehzahl (N) des Motors und die Berechnung des Korrekturbetrags (ΔIGN) des Zündzeitpunkts zeitlich unabhängig voneinander derart durchführt, daß der Erfassungsvorgang periodisch synchron mit der Drehung des Motors durchgeführt wird, während der Berechnungsvorgang periodisch zu jeweils vorbestimmten festen Zeitpunkten durchgeführt wird, und wobei der Änderungsbetrag (dN) der Drehzahl (N) des Motors als die Differenz zwischen einem gegenwärtigen und einem früheren Wert der Drehzahl (N) des Motors berechnet wird, und wobei der frühere Wert des Korrekturbetrags (ΔIGN) des Zündzeitpunkts zur Berechnung des Zündzeitpunkts immer dann verwendet wird, wenn kein neuer Wert des Änderungsbetrags (dN) der Drehzahl (N) des Motors vorliegt.

## Revendications

1. Procédé de réglage du moment d'allumage de moteurs à combustion interne, comprenant les étapes suivantes :
- la détection de la vitesse (N) de rotation du moteur,
- la détection du fait que le moteur est en accélération,
- la détermination d'un mouvement fondamental d'allumage (IGNM), et
- le calcul d'une amplitude de correction de moment d'allumage (ΔIGN) en fonction de l'amplitude (dN) de variation de la vitesse de rotation (N) du moteur, et
- la modification du moment fondamental d'allumage (IGNM) en fonction de l'amplitude de correction de moment d'allumage (ΔIGN) lorsque le moteur est en accélération,
caractérisé en ce que
- la détection de la vitesse (N) de rotation du moteur et le calcul de l'amplitude de correction du moment d'allumage (ΔIGN) sont réalisés indépendamment dans le temps, de manière que la détection soit exécutée en synchronisme avec la rotation du moteur alors que le calcul est exécuté périodiquement à des moments fixes prédéterminés, et
- l'amplitude (dN) de variation de la vitesse (N) de rotation du moteur est calculée sous forme de la différence entre une valeur actuelle et une valeur antérieure de la vitesse (N) de rotation du moteur, et la valeur antérieure de l'amplitude de correction du moment d'allumage (ΔIGN) est utilisée dans le calcul du moment d'allumage chaque fois qu'aucune nouvelle valeur de l'amplitude (dN) de variation de la vitesse (N) de rotation du moteur n'est disponible.

2. Appareil de réglage du moment d'allumage de moteurs à combustion interne, notamment destiné à la mise en oeuvre du procédé selon la revendication 1, comprenant
- un dispositif (15, 16, 100, 204) de détection de la vitesse (N) de rotation et de l'accélération d'un moteur,
- un dispositif (15, 212, 205, 206) de détermination et de calcul destiné à déterminer un moment fondamental d'allumage (IGNM) et à calculer une amplitude de correction de moment d'allumage (ΔIGN) en fonction de l'amplitude (dN) de variation de la vitesse (N) de rotation du moteur, et
- un dispositif (15, 208) de modification du moment fondamental d'allumage (IGNM) en fonction de l'amplitude de correction de moment d'allumage (ΔIGN) lorsque le moteur est en accélération,
caractérisé en ce qu'il comporte en outre
- un dispositif (15) de commande qui exécute la détection de la vitesse (N) de rotation du moteur et le calcul de l'amplitude de correction du moment d'allumage (ΔIGN) indépendamment l'un de l'autre au cours du temps, d'une manière telle que le traitement de détection est exécuté périodiquement en synchronisme avec la rotation du moteur alors que le traitement de calcul est exécuté périodiquement à chaque moment fixe prédéterminé, l'amplitude (dN) de variation de la vitesse (N) de rotation du moteur est calculée sous forme de la différence entre une valeur actuelle et une valeur antérieure de la vitesse (N) de rotation du moteur, et la valeur antérieure de l'amplitude de correction du moment d'allumage (ΔIGN) est utilisée pour le calcul du moment d'allumage chaque fois qu'aucune nouvelle valeur de l'amplitude (dN) de variation de la vitesse (N) de rotation du moteur n'est disponible.
